# FASCICULE DE BREVET EUROPEEN

(11) **EP 4 035 916 B1**
(45) Date de publication et mention de la délivrance du brevet: **10.05.2023**
(21) Numéro de dépôt: 22154340.8
(22) Date de dépôt: 31.01.2022
(51) Int. Cl.: B60K 1/00, F04D 25/08, F04D 27/00, F04D 29/28, B60K 11/00, B60K 11/06, B60K 11/08, H02K 9/06, H02K 5/20, H02K 11/22

(54) **DISPOSITIF DE REFROIDISSEMENT D'UN MOTEUR ÉLECTRIQUE, ENSEMBLE DE MOTORISATION ET VÉHICULE ASSOCIÉS**
KÜHLUNGSVORRICHTUNG EINES ELEKTRISCHEN MOTORS, ZUGEHÖRIGE ANTRIEBSANORDNUNG UND ZUGEHÖRIGES FAHRZEUG
COOLING DEVICE OF AN ELECTRIC MOTOR, ASSOCIATED MOTORIZATION ASSEMBLY AND ASSOCIATED VEHICLE

(30) Priorité: 01.02.2021 FR 2100953
(43) Date de publication de la demande: 03.08.2022
(73) Titulaire: ALSTOM Holdings, 93400 Saint-Ouen-sur-Seine (FR)
(72) Inventeur: GUIGNIER, Gilles, 90000 BELFORT (FR); RAGUIN, Bruno, 25290 ORNANS (FR); KEMPF, Antoine, 25110 PONT-LES-MOULINS (FR)
(74) Mandataire: Lavoix

(56) Documents cités:
- EP-A1- 1 100 184
- CN-A- 110 474 470
- JP-A- 2016 021 815

## Description

La présente invention concerne un dispositif de refroidissement d'un moteur électrique de traction d'un véhicule.

L'invention concerne également un ensemble de motorisation comprenant un tel dispositif de refroidissement.

L'invention concerne également un véhicule comprenant un tel ensemble de motorisation.

Le véhicule est par exemple un véhicule ferroviaire, ou, en variante, un véhicule automobile, aérien ou maritime.

Il est nécessaire de refroidir un moteur électrique lorsque celui-ci fonctionne afin d'éviter toute surchauffe et ainsi de garantir son bon fonctionnement.

A cet effet, il est connu de fixer un ventilateur directement sur l'arbre du moteur. La rotation de l'arbre du moteur entraine alors la rotation du ventilateur et fait ainsi circuler un flux d'air dans le moteur. Le moteur est alors dit « autoventilé ».

Toutefois, le ventilateur, qui est fixé sur l'arbre, est soumis à plusieurs sollicitations mécaniques dont les couples pulsatoires transmis par l'arbre et les efforts centrifuges engendrés par la rotation.

Dans le cas où une pièce possédant une masse conséquente est fixée sur le ventilateur, ce dernier doit posséder une résistance mécanique élevée afin d'assurer un niveau satisfaisant de fiabilité. Il est alors nécessaire d'utiliser des alliages métalliques pour la fabrication du ventilateur et de dimensionner le ventilateur avec des épaisseurs importantes.

Ainsi, le ventilateur présente une masse importante qui entraine une diminution de la performance aéraulique et une augmentation du bruit généré.

Des dispositifs de refroidissement sont connus des documents CN 110 474 470 A, JP 2016 021815 A et EP 1 100 184 A1.

Un des objectifs de l'invention est donc de réduire la masse du ventilateur sans toutefois pénaliser la fiabilité et la durée de vie du ventilateur.

A cet effet, l'invention a pour objet un dispositif de refroidissement d'un moteur électrique de traction d'un véhicule, notamment d'un véhicule ferroviaire, le moteur électrique comprenant un rotor et un stator, le dispositif de refroidissement comprenant une enveloppe délimitant un conduit de canalisation d'air reliant une entrée d'air à au moins une sortie d'air, un ventilateur monté à l'intérieur de l'enveloppe et mobile en rotation autour d'un axe principal, le ventilateur comprenant des pales et étant configuré pour forcer la circulation d'un flux d'air depuis l'entrée d'air vers chaque sortie d'air, et un dispositif de mesure de la vitesse de rotation du ventilateur, le dispositif de mesure étant composé d'une roue codeuse liée indirectement au ventilateur et d'un capteur de vitesse fixé sur l'enveloppe et propre à mesurer la vitesse de rotation de la roue codeuse ; le dispositif de refroidissement comportant un plateau de support présentant deux faces opposées, le plateau de support étant propre à être fixé sur le rotor du moteur électrique ; le ventilateur étant distinct du plateau de support et fixé uniquement sur l'une des faces du plateau de support.

Selon des modes de réalisation particuliers de l'invention, le dispositif de refroidissement comprend une ou plusieurs des caractéristiques suivantes, prises isolément ou suivant toutes les combinaisons techniquement possibles :
- la roue codeuse est distincte du plateau de support et fixée uniquement sur le plateau de support ;
- chaque pale s'étend sensiblement radialement par rapport à l'axe principal ;
- le plateau de support présente une forme circulaire centrée sur l'axe principal, chaque pale s'étendant radialement sur une longueur inférieure au rayon du plateau de support ;
- le plateau de support présente une densité massique supérieure à la densité massique des pales ;
- chaque pale présente une épaisseur inférieure à 8 mm ; et
- la roue dentée et le ventilateur sont fixés au plateau de support par des moyens de fixation amovibles.

L'invention a également pour objet un ensemble de motorisation comprenant un moteur électrique de traction d'un véhicule, le moteur électrique comprenant un rotor et un stator ; un carter entourant le moteur électrique, le carter définissant au moins un canal de refroidissement du moteur électrique s'étendant à la périphérie du stator, et un dispositif de refroidissement tel que défini ci-dessus, le dispositif de refroidissement étant fixé sur le carter de telle sorte que le conduit de canalisation d'air soit relié fluidiquement au canal de refroidissement.

Selon des modes de réalisation particuliers de l'invention, l'ensemble de motorisation présente également une ou plusieurs des caractéristiques suivantes, prise(s) isolément ou en combinaison :
- chaque pale est fixée sur la face du plateau de support opposée au moteur électrique ; et
- chaque pale est fixée sur la face du plateau de support en regard du moteur électrique.

L'invention a également pour objet un véhicule, en particulier un véhicule ferroviaire, comprenant au moins un ensemble de motorisation tel que défini ci-dessus.

L'invention et ses avantages seront mieux compris à la lecture de la description qui va suivre, donnée uniquement à titre d'exemple non limitatif, et faite en référence aux dessins annexés, sur lesquels :
- **[****Fig 1****]** la figure 1 est une représentation schématique de côté d'un véhicule ferroviaire ; et
- **[****Fig 2****]** la figure 2 est une vue en coupe d'un ensemble de motorisation selon un premier mode de réalisation embarqué dans le véhicule ferroviaire de la figure 1 ; et
- **[****Fig 3****]** la figure 3 est une vue en coupe d'un ensemble de motorisation selon un deuxième mode de réalisation embarqué dans le véhicule ferroviaire de la figure 1.

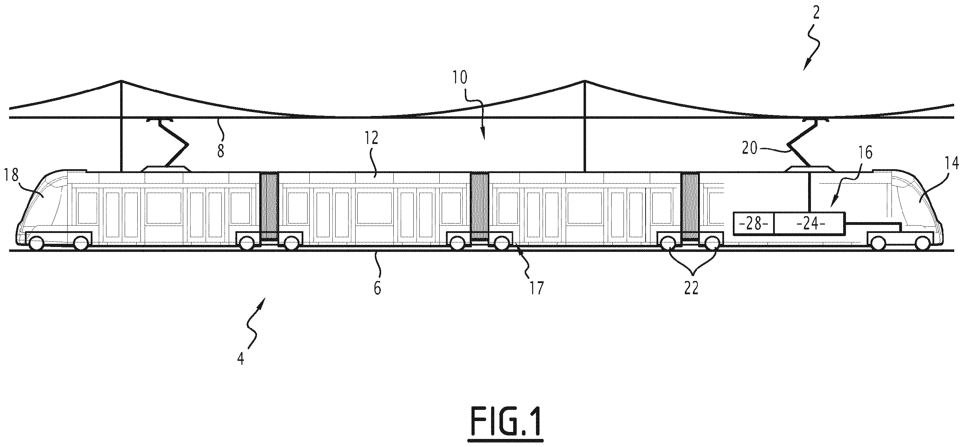

Un système ferroviaire 2 comprenant une infrastructure ferroviaire 4 et un véhicule ferroviaire 10 est illustré sur la figure 1.

L'infrastructure ferroviaire 4 comprend une voie ferrée 6 et une caténaire 8.

La caténaire 8 est un dispositif d'alimentation électrique suspendue au-dessus de la voie ferroviaire 6. La caténaire 8 comprend au moins un fil de contact électriquement conducteur. La caténaire 8 est portée par au moins un câble porteur.

Par la suite, seul le véhicule ferroviaire 10 sera décrit mais l'homme du métier comprendra que l'invention s'applique à tout type de véhicule, par exemple à un véhicule automobile, aérien ou maritime.

Le véhicule ferroviaire 10 est configuré pour permettre le transport de voyageurs et/ou de marchandises.

Comme visible sur la figure 1, le véhicule ferroviaire 10 comporte une ou plusieurs voitures, et au moins un ensemble de motorisation 16 embarqué dans le véhicule 10.

Lorsque le véhicule 10 possède plusieurs voitures, celles-ci sont disposées à la file, les unes derrière les autres.

Le véhicule 10 est composé par exemple d'au moins une voiture intermédiaire 12, ici deux voitures intermédiaires 12, et de deux voitures d'extrémité 14, 18. Chaque voiture d'extrémité 14, 18 est situé à une extrémité respective du véhicule 10.

Le véhicule 10 comprend en outre au moins un pantographe 20 disposé sur l'une des voitures 12, 14, 18. Le pantographe 20 est un dispositif articulé configuré pour capter un courant électrique par frottement sur la caténaire 8.

Chaque voiture 12, 14, 18 s'étend suivant une direction longitudinale et possède deux extrémités longitudinales.

Le véhicule 10 comprend des bogies 17 agencés pour supporter les voitures 12,14, 18 et assurer leur guidage le long de la voie ferrée 16. Chaque bogie 17 supporte une voiture 12, 14, 18 reposant sur ce bogie 17 ou supporte deux voitures 12, 14, 18 voisines reposant par leurs extrémités longitudinales voisines sur ce bogie 17 (on parle alors de « bogie commun »).

Chaque bogie 17 comprend des roues 22 portées par des arbres non représentés sur les figures. Les roues 22 sont configurées pour rouler sur des rails de la voie ferrée 6 et ainsi permettre le déplacement du véhicule ferroviaire 10.

Chaque ensemble de motorisation 16 est embarqué dans une voiture 12, 14, 18. Le véhicule 10 peut comprendre un seul ensemble de motorisation 16 ou plusieurs ensembles de motorisation 16. Lorsque plusieurs ensembles de motorisation 16 sont prévus, ils peuvent être disposés dans une même voiture 12, 14, 18 ou répartis dans plusieurs voitures 12, 14, 18 du véhicule 10.

Le véhicule 10 comprend ici un ensemble de motorisation 16 embarqué dans la voiture d'extrémité 14.

En variante ou en option, le véhicule 10 comprend un ensemble de motorisation dans l'autre voiture d'extrémité 18.

En variante ou en option, le véhicule 10 comprend un ensemble de motorisation 16 embarqué dans au moins une ou dans chacune des voitures intermédiaires 12.

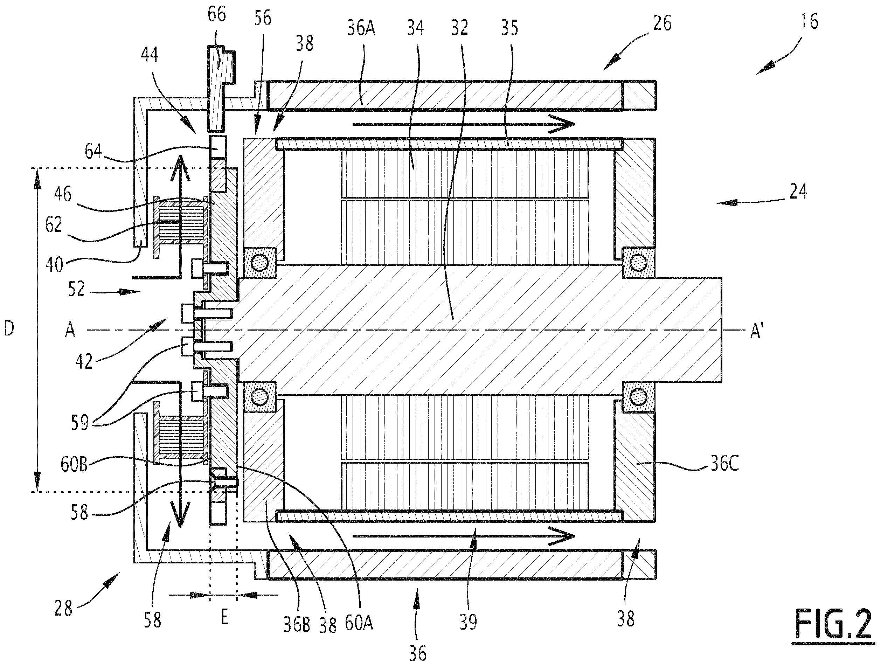

La figure 2 représente l'ensemble de motorisation 16 selon le premier mode de réalisation et qui va être décrit par la suite.

L'ensemble de motorisation 16 s'étend selon un axe principal A-A'.

L'ensemble de motorisation 16 comprend un moteur électrique 24, un carter 26 entourant le moteur électrique 24 et un dispositif de refroidissement 28.

Le moteur électrique 24 est alimenté électriquement par le courant électrique capté par le pantographe 20.

Le moteur électrique 24 est un moteur de traction du véhicule 10. Le moteur électrique 24 est configuré pour convertir l'énergie électrique reçue en énergie mécanique permettant l'entraînement en rotation des roues 22 et ainsi le déplacement du véhicule 10 le long de la voie ferrée 6.

Dans l'exemple illustré sur la figure 2, le moteur électrique 24 est une machine électrique triphasée comportant un rotor 32, un stator 34 et une cloison extérieure 35.

Le rotor 32 est de forme générale cylindrique et s'étend le long de l'axe principal A-A'. Le rotor 32 est monté rotatif par rapport au stator 34 autour de l'axe principal A-A'.

Le stator 34 s'étend autour du rotor 32.

De préférence, le moteur électrique 24 est un moteur synchrone.

En variante, le moteur électrique 24 est un moteur asynchrone.

La cloison extérieure 35 s'étend autour du stator 34 et protège l'intérieur du moteur électrique 24, en particulier le stator 34 et le rotor 32.

Le carter 26 comprend une paroi latérale 36A s'étendant suivant l'axe principal A-A' en entourant le moteur électrique 24, fermée à ses extrémités axiales par une paroi avant 36B et une paroi arrière 36C.

La section transversale de la paroi latérale 36A, prise perpendiculairement à l'axe principal A-A', présente par exemple une forme générale rectangulaire, en particulier carrée.

En variante, la section perpendiculaire à l'axe principal A-A' de la paroi latérale 36A présente une forme générale circulaire ou polygonale.

La paroi avant 36B est prévue pour être en regard du dispositif de refroidissement 28.

Le carter 26 est muni d'au moins une ouverture 38 traversante pour le passage d'un flux d'air pour le refroidissement du moteur électrique 24.

Avantageusement, comme visible sur la figure 2, le carter 26 comprend une pluralité d'ouvertures 38.

Les ouvertures 38 sont en particulier disposées sur la paroi avant 36B et sur la paroi arrière 36C.

Le carter 26 définit au moins un canal de refroidissement 39 du moteur électrique 24 s'étendant à la périphérie du stator 34.

Chaque canal de refroidissement 39 s'étend entre deux ouvertures 38. Chaque canal de refroidissement 39 est ainsi configuré pour être alimenté par le flux d'air via au moins l'une des ouverture(s) 38 et pour déboucher à l'extérieur du carter 26 au niveau de l'autre ouverture 38.

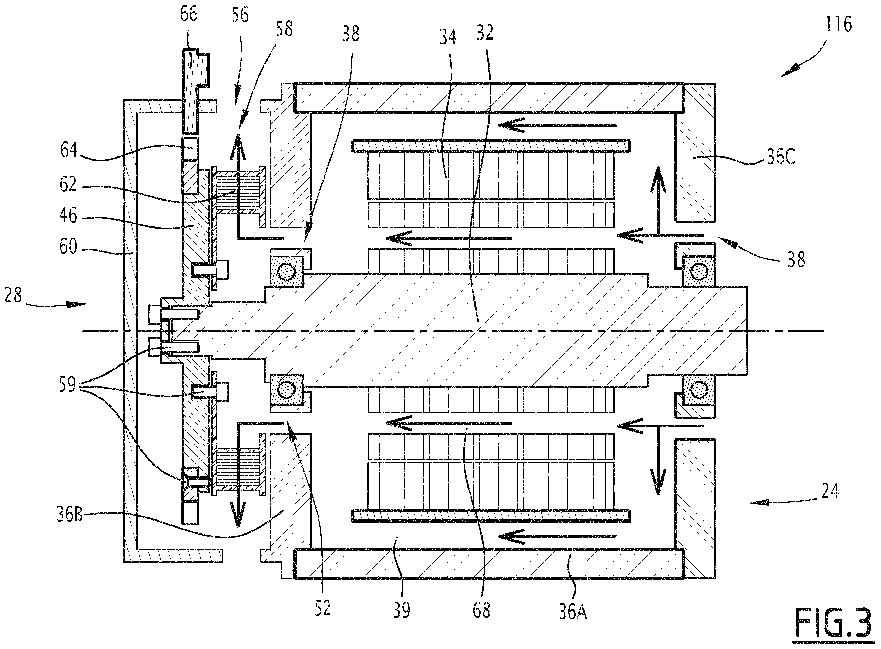

Le flux d'air est représenté sur les figures 2 et 3 par des flèches symbolisant le sens de circulation dudit flux d'air.

Chaque canal de refroidissement 39 est situé à la périphérie du moteur électrique 24.

En particulier, chaque canal de refroidissement 39 est en contact avec la cloison extérieure 35 du moteur électrique 24.

Avantageusement, chaque canal de refroidissement 39 s'étend axialement le long du moteur électrique 24, suivant l'axe principal A-A'.

Ainsi, les canaux de refroidissement 39 s'étendent le long de l'axe principal A-A' depuis la paroi avant 36B jusqu'à la paroi arrière 36C.

Lors du fonctionnement du moteur électrique 24, celui-ci produit de la chaleur qu'il est nécessaire d'évacuer afin de garantir un bon fonctionnement du moteur électrique 24.

La circulation du flux d'air dans le moteur électrique 24 est représentée par les flèches visibles sur la figure 2.

Durant cette circulation, le flux d'air récupère la chaleur produite par le moteur électrique 24 et l'évacue hors du carter 26, vers l'extérieur du véhicule 10.

Le dispositif de refroidissement 28 est configuré pour refroidir le moteur électrique 24.

Sur la figure 2, le dispositif de refroidissement 28 est configuré pour forcer un flux d'air à travers au moins l'une des ouvertures 38 afin de refroidir le moteur électrique 24.

Le dispositif de refroidissement 28 comprend une enveloppe 40, un ventilateur 42, un dispositif de mesure 44 de la vitesse de rotation du ventilateur 42 et un plateau de support 46 propre à accueillir une roue codeuse 64.

L'enveloppe 40 est propre à être disposée sur la paroi avant 36B du carter 26 ou sur la paroi latérale 36A du carter 26.

L'enveloppe 40 est propre à être fixée sur le carter 26, en particulier sur la paroi latérale 36A du carter 26 et/ou la paroi avant 36B du carter 26.

Selon un mode de réalisation, l'enveloppe 40 est fixée par des moyens de fixation amovibles sur le carter 26. Les moyens de fixation sont par exemple des vis.

La section transversale de l'enveloppe 40, prise perpendiculairement à l'axe principal A-A', est semblable à celle du carter 26. Elle présente ici un contour de forme générale rectangulaire, en particulier carrée.

En variante, elle présente un contour de forme générale circulaire ou polygonale.

L'enveloppe 40 définit une entrée d'air 52 pour permettre l'entrée du flux d'air à l'intérieur de l'enveloppe 40.

L'entrée d'air 52 présente une ouverture de forme circulaire par exemple, située sur l'axe A-A'.

Avantageusement, l'entrée d'air 52 présente une étendue transversale maximale comprise entre 20 % et 70 % de l'étendue transversale maximale du dispositif de refroidissement 28.

L'enveloppe 40 possède au moins une sortie d'air 56. Chaque sortie d'air 56 est destinée à se raccorder fluidiquement à au moins une ouverture 38 du carter 26 pour l'alimentation en air de cette ouverture 38.

Ici, l'enveloppe 40 possède une unique sortie d'air 56 de forme annulaire située sensiblement à la périphérie de l'enveloppe 40, en regard des ouvertures 38 de la paroi avant 36B du carter 26.

Comme visible sur la figure 2, l'enveloppe 40 est creuse et délimite un conduit de canalisation 58 d'air reliant l'entrée d'air 52 à chaque sortie d'air 56.

Le dispositif de refroidissement 28 est configuré pour générer le flux d'air dans le conduit de canalisation 58 d'air entre l'entrée d'air 52 et chaque sortie d'air 56 et ainsi alimenter la ou les ouverture(s) 38 avec le flux d'air.

Le plateau de support 46 est fixé sur le rotor 32 du moteur électrique 24.

Avantageusement, le plateau de support 46 est configuré pour son centrage par rapport au rotor 32. Il comprend par exemple un évidement prévu pour l'insertion d'une extrémité du rotor 32.

Comme visible sur la figure 2, le plateau de support 46 est fixé par des moyens de fixation amovibles 59 sur le rotor 32. Les moyens de fixation 59 sont par exemple des vis.

Avantageusement, le plateau de support 46 est réalisé en acier, en fonte ou en alliage d'aluminium.

Le plateau de support 46 présente notamment une densité massique comprise entre 2700 kg/m³ et 8000 kg/m³.

Le plateau de support 46 présente une forme circulaire centrée sur l'axe principal A-A'.

Le plateau de support 46 présente un diamètre extérieur D selon une direction orthogonale à l'axe principal A-A' compris entre 50 % et 80 % du diamètre de l'enveloppe du moteur selon une direction orthogonale à l'axe principal A-A'.

Le plateau de support 46 présente avantageusement une épaisseur E selon l'axe principal A-A' comprise entre 5 mm et 200 mm.

Comme visible sur la figure 2, le plateau de support 46 présente deux faces opposées, dont une première face 60A et une deuxième face 60B. La première face 60A est en regard du moteur électrique 24 et la deuxième face 60B est opposée au moteur électrique 24.

Les deux faces 60A, 60B sont avantageusement parallèles.

Le ventilateur 42 est monté à l'intérieur de l'enveloppe 40.

Le ventilateur 42 est distinct du plateau de support 46 et fixé uniquement sur le plateau de support 46.

Le ventilateur 42 est configuré pour forcer la circulation d'air depuis l'entrée d'air 52 vers chaque sortie d'air 56.

En particulier, le ventilateur 42 est configuré pour aspirer un flux d'air axialement par rapport à l'axe principal A-A par l'entrée 52 et faire circuler ce flux d'air principalement radialement par rapport à l'axe principal A-A dans l'enveloppe 40. L'enveloppe 40 est alors configurée pour canaliser ce flux d'air radial dans le conduit de canalisation 58 et le faire sortir axialement par chaque sortie d'air 56.

A cet effet, le ventilateur 42 est mobile en rotation autour de l'axe principal A-A'.

Le ventilateur 42 comprend des pales 62.

En particulier, le ventilateur 42 comprend un nombre de pales 62 compris entre 3 et 25.

Comme visible sur la figure 2, le ventilateur 42 est fixé sur le plateau de support 46 par des moyens de fixation amovibles 59, notamment au moins une vis.

Comme visible sur la figure 2, dans le premier mode de réalisation, le ventilateur 42 est fixé sur la deuxième face 60B du plateau de support 46 opposée au moteur électrique 24.

Le ventilateur 42 est propre à tourner à la même vitesse que le rotor 32 auquel il est fixé. Le moteur électrique 24 est alors dit auto-ventilé car le ventilateur 42 est mis en rotation par le moteur électrique 24 lui-même.

Chaque pale 62 s'étend sensiblement radialement par rapport à l'axe principal A-A'.

Selon un mode réalisation particulier, chaque pale 62 s'étend radialement sur une longueur inférieure au rayon du plateau de support 46.

Chaque pale 62 présente avantageusement une épaisseur inférieure à 8 mm.

Le ventilateur 42 est composé par exemple uniquement de matériau plastique, d'un matériau métallique ou d'un matériau composite.

Le matériau métallique est par exemple de l'aluminium, du titane ou de l'acier.

Le matériau composite comprend par exemple un matériau plastique mélangé avec un autre matériau tel que de la fibre de verre ou des fibres de carbone par exemple.

Le ventilateur 42 présente notamment une densité massique comprise entre 500 kg/m³ et 5000 kg/m³.

Le plateau de support 46 présente une densité massique strictement supérieure à la densité massique des pales 62.

Le dispositif de mesure 44 de la vitesse de rotation du ventilateur 42 est composé d'une roue codeuse 64 liée indirectement au ventilateur 42 et d'un capteur de vitesse 66.

La roue codeuse 64 est une roue présentant des ouvertures régulières à sa périphérie. Par exemple, la roue codeuse 64 est une roue dentée dont les dents s'étendent régulièrement sur la périphérie de la roue.

Dans un mode de réalisation, la roue codeuse 64 est distincte du plateau de support 46.

La roue codeuse 64 est fixée uniquement sur le plateau de support 46.En particulier, la roue codeuse 64 est fixée sur le plateau de support 46 par des moyens de fixation amovibles 59, notamment ici des vis.

La roue codeuse 64 est notamment disposée à la périphérie du plateau de support 46.

La roue codeuse 64 est alors avantageusement composé d'un matériau ferreux, notamment de l'acier.

En variante, la roue codeuse 64 est venue de matière avec le plateau de support 46.

La roue codeuse 64 et le plateau de support 46 sont alors avantageusement composés d'un matériau ferreux, notamment de l'acier.

Comme visible sur la figure 2, le capteur de vitesse 66 est fixé sur l'enveloppe 40.

Le capteur de vitesse 66 est disposé en regard de la roue codeuse 64.

Le capteur de vitesse 66 est propre à mesurer la vitesse de rotation de la roue codeuse 64. Le capteur de vitesse 66 est par exemple un capteur magnétique.

La figure 3 représente un ensemble de motorisation 116 selon le deuxième mode de réalisation et qui va être décrit par la suite.

L'ensemble de motorisation 116 selon le deuxième mode de réalisation présente une structure semblable à l'ensemble de motorisation 16 selon le premier mode de réalisation et seules les différences entre les deux modes de réalisation seront décrites par la suite.

En particulier, l'ensemble de motorisation 116 selon le deuxième mode de réalisation diffère en ce que le ventilateur 42 est fixé sur la première face 60A du plateau de support 46, en regard du moteur électrique 24.

Comme visible sur la figure 3, l'entrée d'air 52 du dispositif de refroidissement 28 est destinée à se raccorder fluidiquement à au moins l'une des ouvertures 38 du carter 26 pour l'alimentation en air de cette ouverture 38.

Chaque sortie d'air 56 est disposée sur la périphérie de l'enveloppe 40.

Le ventilateur 42 est configuré pour tirer la circulation d'air depuis l'entrée d'air 52 vers chaque sortie d'air 56.

En particulier, le ventilateur 42 est configuré pour aspirer par l'entrée d'air 52 depuis le canal de refroidissement 39 et faire circuler ce flux d'air à travers le conduit de canalisation 58 jusqu'à la sortie d'air 56 en dehors du dispositif de refroidissement 28.

Ainsi, comme visible sur la figure 3, le flux d'air circule dans le canal de refroidissement 39 du moteur électrique 24 dans le sens inverse par rapport au sens de circulation du flux d'air dans le premier mode de réalisation.

La circulation du flux d'air dans le moteur électrique 24 est représentée par les flèches visibles sur la figure 3.

Le flux d'air pénètre le moteur électrique 24 par la paroi arrière 36C du carter 26, circule dans le canal de refroidissement 39 puis circule dans le dispositif de refroidissement 28 avant de s'échapper par la sortie d'air 56.

Le moteur électrique 24 est alors dit « à ventilation tirée ».

Avantageusement, le moteur électrique 24 comprend en outre au moins un canal de ventilation 68 traversant le rotor 32. Chaque canal de ventilation 68 est relié fluidiquement aux ouvertures 38 et au canal de refroidissement 39.

On conçoit alors que la présente invention présente un certain nombre d'avantages.

En effet, le plateau de support 46 permet de supporter l'essentiel des sollicitations mécaniques dues au fonctionnement du moteur électrique 24 et du ventilateur 42.

Par conséquent, les pales 62 supportent moins de contraintes que dans les ventilateurs conventionnels et présentent donc éventuellement une structure mécanique moins solide sans pénaliser la fiabilité et la durée de vie du ventilateur 42.

La forme des pales 62 peut ainsi être affinées et par conséquent, améliorer les performances aérauliques et réduire le bruit provoqué par le ventilateur 42.

La fabrication de ces pales 62 est également simplifiée et moins onéreuse.

## Revendications

1. Dispositif de refroidissement (28) d'un moteur électrique (24) de traction d'un véhicule (10), notamment d'un véhicule ferroviaire, le moteur électrique (24) comprenant un rotor (32) et un stator (34), le dispositif de refroidissement (28) comprenant :
- une enveloppe (40) délimitant un conduit de canalisation (58) d'air reliant une entrée d'air (52) à au moins une sortie d'air (56),
- un ventilateur (42) monté à l'intérieur de l'enveloppe (40) et mobile en rotation autour d'un axe principal (A-A'), le ventilateur (42) comprenant des pales (62) et étant configuré pour forcer la circulation d'un flux d'air depuis l'entrée d'air (52) vers chaque sortie d'air (56), et
- un dispositif de mesure (44) de la vitesse de rotation du ventilateur (42), le dispositif de mesure (44) étant composé d'une roue codeuse (64) liée indirectement au ventilateur (42) et d'un capteur de vitesse (66) fixé sur l'enveloppe (40) et propre à mesurer la vitesse de rotation de la roue codeuse (64),
**caractérisé en ce que** le dispositif de refroidissement (28) comporte un plateau de support (46) présentant deux faces (60A, 60B) opposées, le plateau de support (46) étant propre à être fixé sur le rotor (32) du moteur électrique (24),
le ventilateur (42) étant distinct du plateau de support (46) et fixé uniquement sur l'une des faces (60A, 60B) du plateau de support (46).

2. Dispositif de refroidissement (28) selon la revendication 1, dans lequel la roue codeuse (64) est distincte du plateau de support (46) et fixée uniquement sur le plateau de support (46).

3. Dispositif de refroidissement (28) selon la revendication 1 ou 2, dans lequel chaque pale (62) s'étend sensiblement radialement par rapport à l'axe principal (A-A').

4. Dispositif de refroidissement (28) selon la revendication 3, dans lequel le plateau de support (46) présente une forme circulaire centrée sur l'axe principal (A-A'), chaque pale (62) s'étendant radialement sur une longueur inférieure au rayon du plateau de support (46).

5. Dispositif de refroidissement (28) selon l'une quelconque des revendications précédentes, dans lequel le plateau de support (46) présente une densité massique supérieure à la densité massique des pales (62).

6. Dispositif de refroidissement (28) selon l'une quelconque des revendications précédentes, dans lequel chaque pale (62) présente une épaisseur inférieure à 8 mm.

7. Dispositif de refroidissement (28) selon l'une quelconque des revendications précédentes, dans lequel la roue dentée (64) et le ventilateur (42) sont fixés au plateau de support (46) par des moyens de fixation (59) amovibles.

8. Ensemble de motorisation (16, 116) comprenant :
- un moteur électrique (24) de traction d'un véhicule (10), le moteur électrique (24) comprenant un rotor (32) et un stator (34) ;
- un carter (26) entourant le moteur électrique (24), le carter (26) définissant au moins un canal de refroidissement (39) du moteur électrique (24) s'étendant à la périphérie du stator (34), et
- un dispositif de refroidissement (28) selon l'une quelconque des revendications précédentes, le dispositif de refroidissement (28) étant fixé sur le carter (26) de telle sorte que le conduit de canalisation (58) d'air soit relié fluidiquement au canal de refroidissement (39).

9. Ensemble de motorisation (16) selon la revendication 8, dans lequel chaque pale (62) est fixée sur la face du plateau de support (46) opposée au moteur électrique (24) ou sur la face du plateau de support (46) en regard du moteur électrique (24).

10. Véhicule (10), notamment véhicule ferroviaire, comprenant au moins un ensemble de motorisation (16, 116) selon l'une quelconque des revendications 8 ou 9.

## Patentansprüche

1. Kühlvorrichtung (28) eines Elektromotors (24) für den Antrieb eines Fahrzeugs (10), insbesondere eines Schienenfahrzeugs, der Elektromotor (24) umfassend einen Rotor (32) und einen Stator (34), die Kühlvorrichtung (28) umfassend:
- eine Hülle (40), die einen Luftleitkanal (58) begrenzt, der einen Lufteinlass (52) mit mindestens einem Luftauslass (56) verbindet,
- einen Lüfter (42), der innerhalb des Gehäuses (40) montiert und um eine Hauptachse (A-A') drehbar ist, wobei der Lüfter (42) Schaufeln (62) umfasst und konfiguriert ist, um die Zirkulation eines Luftstroms von dem Lufteinlass (52) zu jedem Luftauslass (56) zu erzwingen, und
- eine Messvorrichtung (44) der Drehgeschwindigkeit des Lüfters (42), wobei die Messvorrichtung (44) aus einem Kodierrad (64), das indirekt mit dem Lüfter (42) verbunden ist, und einem Geschwindigkeitssensor (66) besteht, der an das Gehäuse (40) befestigt ist und geeignet ist, um die Drehgeschwindigkeit des Kodierrads (64) zu messen,
**dadurch gekennzeichnet, dass** die Kühlvorrichtung (28) eine Trägerplatte (46) umfasst, die zwei gegenüberliegenden Seite (60A, 60B) aufweist, wobei die Trägerplatte (46) geeignet ist, um an dem Rotor (32) des Elektromotors (24) befestigt zu werden,
wobei der Lüfter (42) von der Trägerplatte (46) verschieden ist und nur an einer der Seiten (60A, 60B) der Trägerplatte (46) befestigt ist.

2. Kühlvorrichtung (28) nach Anspruch 1, wobei das Kodierrad (64) von der Trägerplatte (46) verschieden und nur an der Trägerplatte (46) befestigt ist.

3. Kühlvorrichtung (28) nach Anspruch 1 oder 2, wobei sich jede Schaufel (62) im Wesentlichen radial in Bezug auf die Hauptachse (A-A') erstreckt.

4. Kühlvorrichtung (28) nach Anspruch 3, wobei die Trägerplatte (46) eine kreisförmige Form aufweist, die auf der Hauptachse (A-A') zentriert ist, wobei sich jede Schaufel (62) radial über eine Länge erstreckt, die kleiner ist als der Radius der Trägerplatte (46).

5. Kühlvorrichtung (28) nach einem der vorherigen Ansprüche, wobei die Trägerplatte (46) eine höhere Massendichte als die Massendichte der Schaufeln (62) aufweist.

6. Kühlvorrichtung (28) nach einem der vorherigen Ansprüche, wobei jede Schaufel (62) eine Stärke von weniger als 8 mm aufweist.

7. Kühlvorrichtung (28) nach einem der vorherigen Ansprüche, wobei das Zahnrad (64) und der Lüfter (42) durch lösbare Befestigungseinrichtungen (59) an der Trägerplatte (46) befestigt sind.

8. Motorisierungsanordnung (16, 116), umfassend:
- einen Elektromotor (24) zum Antreiben eines Fahrzeugs (10), der Elektromotor (24) umfassend einen Rotor (32) und einen Stator (34);
- ein Gehäuse (26), das den Elektromotor (24) umgibt, wobei das Gehäuse (26) mindestens einen Kühlkanal (39) des Elektromotors (24) definiert, der sich am Umfang des Stators (34) erstreckt, und
- eine Kühlvorrichtung (28) nach einem der vorherigen Ansprüche, wobei die Kühlvorrichtung (28) an dem Gehäuse (26) befestigt ist, sodass der Luftleitkanal (58) fluidisch mit dem Kühlkanal (39) verbunden ist.

9. Motorisierungsanordnung (16) nach Anspruch 8, wobei jede Schaufel (62) an der dem Elektromotor (24) gegenüberliegenden Seite der Trägerplatte (46) oder an der dem Elektromotor (24) zugewandten Seite der Trägerplatte (46) befestigt ist.

10. Fahrzeug (10), insbesondere Schienenfahrzeug, umfassend mindestens eine Motorisierungsanordnung (16, 116) nach einem der Ansprüche 8 bis 9.

## Claims

1. Cooling device (28) for an electric traction motor (24) of a vehicle (10), in particular a rail vehicle, the electric motor (24) comprising a rotor (32) and a stator (34), the cooling device (28) comprising:
- a casing (40) defining an air duct (58) connecting an air inlet (52) to at least one air outlet (56),
- a fan (42) mounted within the casing (40) and rotatable about a main axis (A-A'), the fan (42) comprising blades (62) and being configured to force a flow of air from the air inlet (52) to each air outlet (56), and
- a device (44) for measuring the speed of rotation of the fan (42), the measuring device (44) consisting of an encoder wheel (64) indirectly connected to the fan (42) and a speed sensor (66) attached to the casing (40) and suitable for measuring the speed of rotation of the encoder wheel (64),
**characterised in that** the cooling device (28) comprises a support plate (46) having two opposite faces (60A, 60B), the support tray (46) being adapted to be fixed to the rotor (32) of the electric motor (24),
the fan (42) being separate from the support tray (46) and attached to only one side (60A, 60B) of the support tray (46).

2. A cooling device (28) according to claim 1, wherein the encoder wheel (64) is separate from the support tray (46) and attached only to the support tray (46).

3. A cooling device (28) as claimed in claim 1 or 2, wherein each blade (62) extends substantially radially of the major axis (A-A').

4. A cooling device (28) of claim 3, wherein the support tray (46) has a circular shape centred on the major axis (A-A'), each blade (62) extending radially for a length less than the radius of the support tray (46).

5. A cooling device (28) according to any of the preceding claims, wherein the support tray (46) has a mass density greater than the mass density of the blades (62).

6. A cooling device (28) according to any of the preceding claims, wherein each blade (62) has a thickness of less than 8 mm.

7. A cooling device (28) according to any of the preceding claims, wherein the gear wheel (64) and the fan (42) are attached to the support tray (46) by removable fastening means (59).

8. A drive assembly (16, 116) comprising:
- an electric motor (24) for driving a vehicle (10), the electric motor (24) comprising a rotor (32) and a stator (34);
- a housing (26) surrounding the electric motor (24), the housing (26) defining at least one cooling channel (39) of the electric motor (24) extending around the periphery of the stator (34), and
- a cooling device (28) according to any of the preceding claims, the cooling device (28) being attached to the housing (26) such that the air duct (58) is fluidly connected to the cooling channel (39).

9. The actuator assembly (16) of claim 8, wherein each blade (62) is attached to the side of the support tray (46) opposite the electric motor (24) or to the side of the support tray (46) facing the electric motor (24).

10. A vehicle (10), particularly a railway vehicle, comprising at least one assembly (16, 116) according to any of claims 8 to 9.
